# EUROPÄISCHE PATENTSCHRIFT

(11) **EP 1 614 557 B1**
(45) Veröffentlichungstag und Bekanntmachung des Hinweises auf die Patenterteilung: **23.02.2011**
(21) Anmeldenummer: 05014641.4
(22) Anmeldetag: 06.07.2005
(51) Int. Cl.: B60D 1/54, B60D 1/06

(54) **Anhängekupplung für Kraftfahrzeuge**
Trailer hitch for motor vehicles
Dispositif d'attelage pour véhicules automobiles

(30) Priorität: 10.07.2004 DE 202004010806 U
(43) Veröffentlichungstag der Anmeldung: 11.01.2006
(73) Patentinhaber: WESTFALIA - Automotive GmbH, 33378 Rheda-Wiedenbrück (DE)
(72) Erfinder: Domke, Friedrich, 33442 Herzebrock-Clarholz (DE); Hermbusch, Gerhard, 33449 Langenberg (DE); Peitz, Jürgen, 33378 Rheda-Wiedenbrück (DE); Weniger, Burkhard, 59514 Welver-Berwicke (DE); Wyrwich, Martin, 33378 Rheda-Wiedenbrück (DE)
(74) Vertreter: Grosse, Wolf-Dietrich Rüdiger

(56) Entgegenhaltungen:
- EP-A- 1 142 732
- EP-A- 1 435 305
- EP-A- 1 491 369
- DE-A1- 10 347 816

## Beschreibung

Die Erfindung betrifft eine Anhängekupplung für Kraftfahrzeuge, umfassend eine fahrzeugfest angeordnete, schwenkbar sowie axial verschieblich gelagerte Kugelstange, die an ihrem freien Ende eine Kupplungskugel trägt und sowohl in ihrer Ruhelage als auch in ihrer Betriebslage über in Eingriff bringbare Formschlußkonturen einerseits eines Kugelstangenlagerkopfes und andererseits eines diesem gegenüber liegenden Bauteiles drehfest festlegbar ist, wobei der Kugelstangenlagerkopf mit Anschlagmitteln ausgebildet ist, denen in seiner Schwenkbahn liegende Gegenanschläge zugeordnet sind, die in der Betriebsstellung und in der Ruhestellung der Kugelstange die Schwenkbewegung des Kugelstangenlagerkopfes begrenzen, wie aus der EP 1 142 732 A1 bekannt.

Bei einer durch die DE 102 52 722 B3 bekannt gewordenen Anhängekupplung ist der Kugelstangenlagerkopf auf einer am Anbauflansch befestigten Hohlwelle angeordnet, die zentral integriert mit einer axial wirkenden Verriegelung des Kugelstangenlagerkopfes zum in Eingriff bringen der Formschlusskonturen sowohl in der Betriebslage als auch in der Ruhelage der Kugelstange ausgebildet ist. Die axial wirkende Verriegelung ermöglicht eine selbsttätige axiale Zwangsverschiebung der Kugelstange, sobald die Sperrung in einer Drehendlage aufgehoben wird. Dies dann, wenn über ein von außen betätigbares Druck- oder Zugmittel ein Sperrbolzen ausgerückt bzw. freigegeben wird. Das kann mittels beispielsweise eines Handrades, wie aus der DE-U-94 08 478.5 bekannt, ausgelöst werden, indem eine Zahnstange einen Bowdenzug als Verbindung zum Sperrbolzen betätigt, so dass der Sperrbolzen zurückgezogen wird. Durch das Zurückziehen des Sperrbolzens kommt die Kugelstange aus ihrer Formschlussverbindung, hier in Form von Kugeln und im gegenüberliegenden Bauteil komplementären Kalotten, von Befestigungs- und Anbauflansch frei und kann nach dem Entriegeln somit unter der Schwerkraft bei gleichzeitiger axialer Verschiebung in eine Zwischenposition schwenken.

Aus der Zwischenposition heraus lässt sich die Kugelstange manuell oder motorbetrieben in die gewünschte Drehendlage verschwenken und durch Vorrücken des Sperrbolzens verriegeln. Sowohl in der Ruhelage, in welcher sich die Kugelstange in etwa quer zur Fahrzeuglängsrichtung unter dem Stoßfänger bzw. der Heckschürze befindet, als auch in der Betriebslage, in welcher sich die Kugelstange im wesentlichen in Fahrzeuglängsrichtung befindet, wird die Kugelstange dann mittels der Formschlussverbindung unverdrehbar festgelegt. Die Formschlussverbindung, bei einer durch die DE 198 59 961 A1 bekannt gewordenen Anhängekupplung besteht diese beispielsweise aus einer Verzahnung sowie einer Gegenverzahnung, greift in den Drehendstellungen des Kugeistangenlagerkopfes ineinander.

Der Erfindung liegt die Aufgabe zugrunde, eine gattungsgemäße Anhängekupplung zu schaffen, die eine noch größere Betriebssicherheit bietet.

Diese Aufgabe wird erfindungsgemäß dadurch gelöst, dass die Gegenanschläage gleichzeitig zum axialen Einrücken des Kugelstangenlagerkopfes in die Formschlussverbindung der Formschlusskonturen ausgebildet sind. Es lässt sich hiermit erreichen, dass die Elemente - Kugeln und Kalotten oder Verzahnung und Gegenverzahnung oder dergleichen - der Formschlussverbindung stets eine deckungsgleiche Stellung einnehmen und ein ungestörtes, ordnungsgemäßes I-neingriffbringen der Formschlusselemente exakt gewährleistet wird. Außerdem wird damit die gleichzeitige selbsttätige axiale Zwangsverschiebung der Kugelstange begünstigt bzw. unterstützt.

Eine bevorzugte Ausführung der Erfindung sieht vor, dass die Gegenanschläge mit einer den Anschlagmitteln des Kugelstangenlagerkopfes beim Auftreffen eine axiale Bewegungskomponente auferlegenden Einrückkontur ausgebildet sind, die in eine die Bewegungen beendende Anschlagkontur übergeht. Die Anschlagmittel, vorteilhafte zwei im Abstand voneinander angeordnete, über den Kugelstangenlagerkopf radial herausragende Bolzen, die mit einem ihnen in der jeweiligen Schwenkrichtung des Kugelstangenlagerkopfes angeordneten Gegenanschlag zusammenwirken, werden aufgrund der Formgebung der Einrückkontur mit dem Beginn des Auflaufens eines Anschlagmittels auf den Gegenanschlag gezielt axial in Richtung der Formschlussverbindung beaufschlagt. Diese zusätzliche Bewegungskomponente, die sich der Schwenkbewegung des Kugelstangenlagerkopfes somit temporär überlagert, wird dann beendet, wenn das Anschlagmittel die Anschlagkontur am Fuß der Einrückkontur erreicht hat. Das erfindungsgemäße Ablaufen des Anschlagmittels auf einer Einrückkontur stellt die automatische axiale Verschiebung des Kugelstangenlagerkopfes in seine Formschlussverbindung selbst dann sicher, wenn bei einer manuell verschwenkbaren Kugelstange am Ende des jeweiligen Schwenkvorganges (Betriebsstellung oder Ruhestellung) von Hand eine Kraft entgegen der Verriegelungsrichtung erzeugt und aufrecht erhalten würde.

Die Gegenanschläge lassen sich nach einer Ausgestaltung der Erfindung vorteilhaft an Bauteilen eines am Fahrzeug montierten, ohnehin erforderlichen Anhängerkupplungs-Querträgers anordnen, aber auch an anderer Stelle vorsehen, z. B. integriert in das Schwenksystem bzw. den Kugelstangenlagerkopf. Als solche Bauteile liegen der Anbauflansch und/oder ein Verbindungsblech zum Querträger bzw. Traggestell der Anhängevorrichtung vor.

Weitere Merkmale und Einzelheiten der Erfindung ergeben sich aus den Ansprüchen und der Beschreibung eines in den Zeichnungen dargestellten Ausführungsbeispiels der Erfindung. Es zeigen:
- Fig. 1: in einer Seitenansicht eine Anhängekupplung, aus Gründen der besseren Übersicht ohne Kugelstangenhals und Kupplungskugel dargestellt, von der ein schwenkbarer Kugelstangenlagerkopf mit zwei umfangsverteilt angeordneten Anschlagmitteln und diesen im Schwenkweg des Kugelstangenlagerkopfes zugeordneten Gegenanschlägen zu erkennen ist, in einer Anfangsposition des Kugelstangenlagerkopfes zu dessen Festlegung in der Betriebslage durch Einrücken einer Formschlußverbindung;
- Fig. 2: die Anhängekupplung nach Fig. 1 in einer in der Zeichnungsebene nach links gedrehten Vorderansicht, in Pfeilrichtung X gesehen;
- Fig. 3: eine Darstellung wie gemäß Fig. 1, in einer Zwischenposition des Kugelstangenlagerkopfes;
- Fig. 4: die Zwischenposition der Fig. 3, in einer Darstellung wie gemäß Fig. 2;
- Fig. 5: eine Darstellung wie gemäß Fig. 1, in der Endposition des Kugelstangenlagerkopfes;
- Fig. 6: die Endposition nach Fig. 5, in einer Darstellung wie gemäß Fig. 2;
- Fig. 7: die Anhängekupplung nach Fig. 1 in einer anderen Seitenansicht, dargestellt in einer Anfangsposition des Kugelstangenlagerkopfes zu dessen Festlegung in der Ruhelage durch Einrücken einer Formschlussverbindung der Kugelstange;
- Fig. 8: die Anhängekupplung nach Fig. 7, in einer in der Zeichnungsebene nach links gedrehten Vorderansicht in Pfeilrichtung Y gesehen;
- Fig. 9: eine Darstellung wie gemäß Fig. 7, in einer Zwischenposition des Kugelstangenlagerkopfes;
- Fig.10: die Zwischenposition nach Fig. 9, in einer Darstellung wie gemäß Fig. 8,
- Fig:11: eine Darstellung wie gemäß Fig. 7, in der Endposition des Kugelstangenlagerkopfes; und
- Fig.12: die Endposition nach Fig. 11, in einer Darstellung wie gemäß Fig. 8.

Von einer als solche hinlänglich bekannten Anhängekupplung 1 sind in den Figuren der Einfachheit halber lediglich die für die Drehendlagenpositionierung einer an ihrem freien Ende eine Kupplungskugel tragenden Kugelstange erforderlichen Bauteile dargestellt. Diese Bauteile sind ein im Uhrzeigersinn und in Gegenrichtung verschwenkbarer Kugelstangenlagerkopf 2 und ein Anbauflansch 3, über den der Kugelstangenlagerkopf 2 samt Kugelstange an einem ein- oder mehrteiligen Querträger eines Fahrzeugs befestigt ist, sowie ein Verbindungsblech 4 zu dem vorgenannten Querträger der Anhängekupplung 1. Die nach dem axialen Einrücken des Kugelstangenlagerkopfes 2 die jeweilige Drehendlage (Betriebs- oder Ruhestellung) sichernde Formschlussverbindung 5 besteht im Ausführungsbeispiel aus in dem Kugelstangenlagerkopf 2 angeordneten Kugeln 6 und diesen in dem gegenüberliegenden Anbauflansch 3 zugeordneten, nicht gezeigten Kugelkalotten, in die die Kugeln 6 eingreifen und den Kugelstangenlagerkopf 2 bzw. die Kugelstange damit drehfest festlegen.

Der kegelige Kugelstangenlagerkopf 2 ist hier mit Anschlagmitteln 7 in Form von zwei über seinen größten Durchmesser herausragenden, d.h. radial vorstehenden, im Abstand voneinander angeordneten Bolzen 8a und 8b versehen. Den Bolzen 8a, 8b sind beim Verschwenken des Kugelstangenlagerkopfes 2 in ihrer Bewegungsbahn liegende Gegenanschläge 9 bzw. 10 zugeordnet, und zwar dem Bolzen 8a der die Drehendlage der Betriebsstellung der Anhängekupplung 1 bzw. des Kugelstangenlagerkopfes 2 definierende, am Anbauflansch 3 befestigte Gegenanschlag 9, sowie dem Bolzen 8b der an dem Verbindungsblech 4 ausgebildete, die Drehendlage zur Ruhestellung der Anhängekupplung 1 bzw. des Kugelstangenlagerkopfes 2 definierende Gegenanschlag 10.

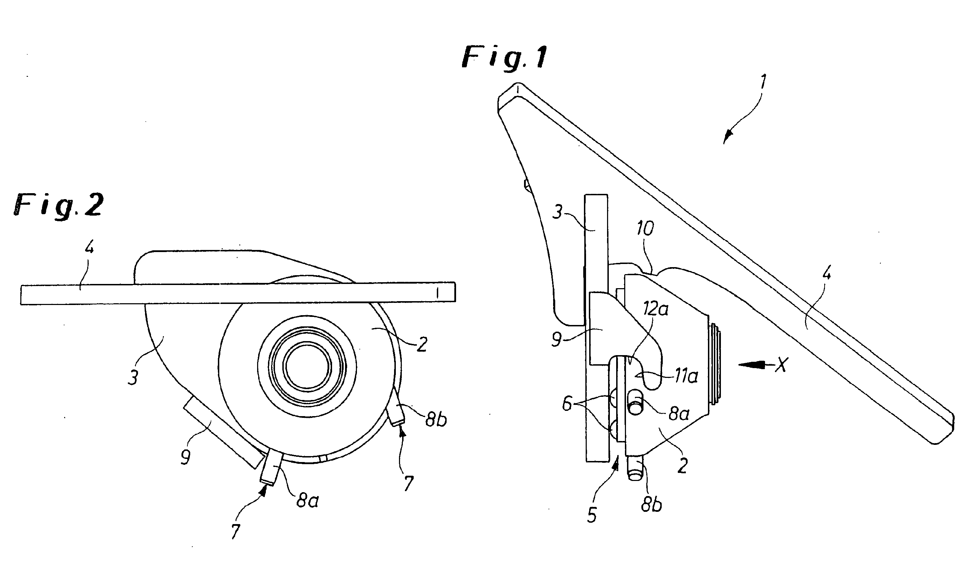

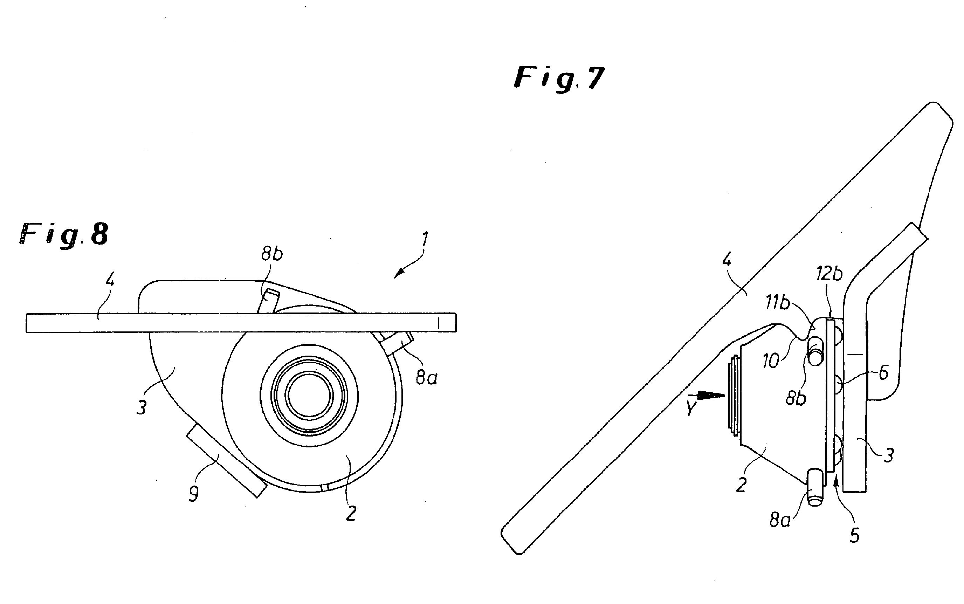

Sowohl der Gegenanschlag 9 als auch der Gegenanschlag 10 sind mit einer Einrückkontur 11 a bzw. 11 b und auch einer Anschlagkontur 12a bzw. 12b ausgebildet (vgl. die Fig. 1 und 7). Beim Auftreffen des Bolzens 8a bzw. 8b auf die Einrückkontur 11 a bzw. 11b der Gegenanschläge 9 bzw. 10 wird dem Kugelstangenlagerkopf 2 aufgrund der Formgebung der Einrückkonturen 11a, 11b eine axiale Bewegungskomponente auferlegt, die das Einrasten der Kugeln 6 in die Kugelkalotten der Formschlussverbindung 5 bewirkt. Diese axiale Einrück- bzw. Bewegungskomponente wird exakt in der jeweiligen Drehendlage dann beendet und eine weitere Verschwenkung des Kugelstangenlagenkopfes 2 ausgeschlossen, wenn die Bolzen 8a bzw. 8b auf die Anschlagkonturen 12a bzw. 12b der Gegenanschläge 9 bzw. 10 aufgetroffen sind.

Den ebenso wie die Fig. 7 bis 12 aufeinanderfolgende Betriebsphasen darstellenden Fig. 1 bis 6 läßt sich die Funktion des Gegenanschlags 9 im Zusammenwirken mit dem Bolzen 8a als Drehendanschlag und Einrückhilfe zur Verriegelung der Anhängekupplung 1 in der Betriebsstellung des Kugelstangenlagerkopfes 2 mit Kugelstange und den Fig. 7 bis 12 die gleiche Funktion im Zusammenwirken von Bolzen 8b und Gegenanschlag 10 zur Festlegung der Ruhestellung der Anhängekupplung 1 bzw. des Kugelstangenlagerkopfes 3 mit Kugelstange entnehmen.

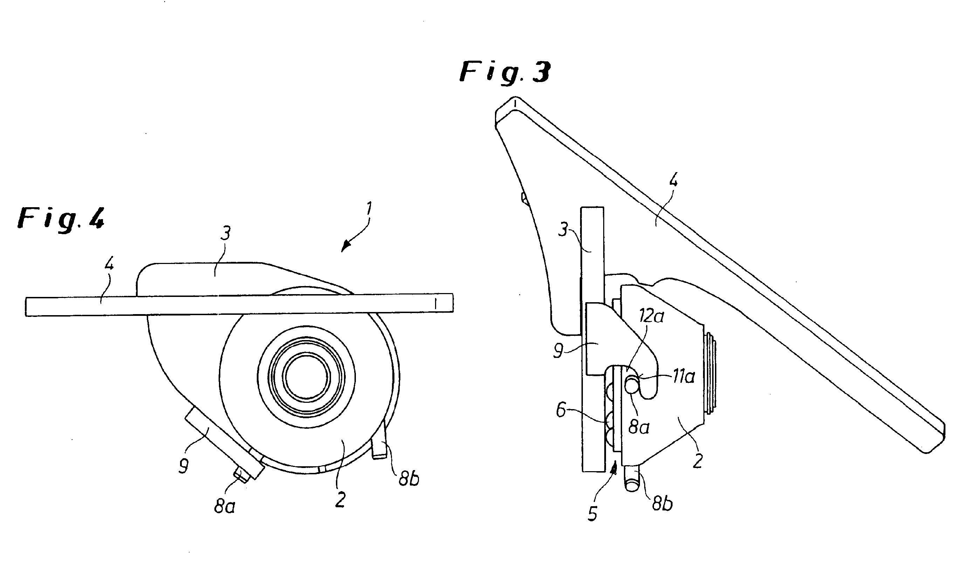

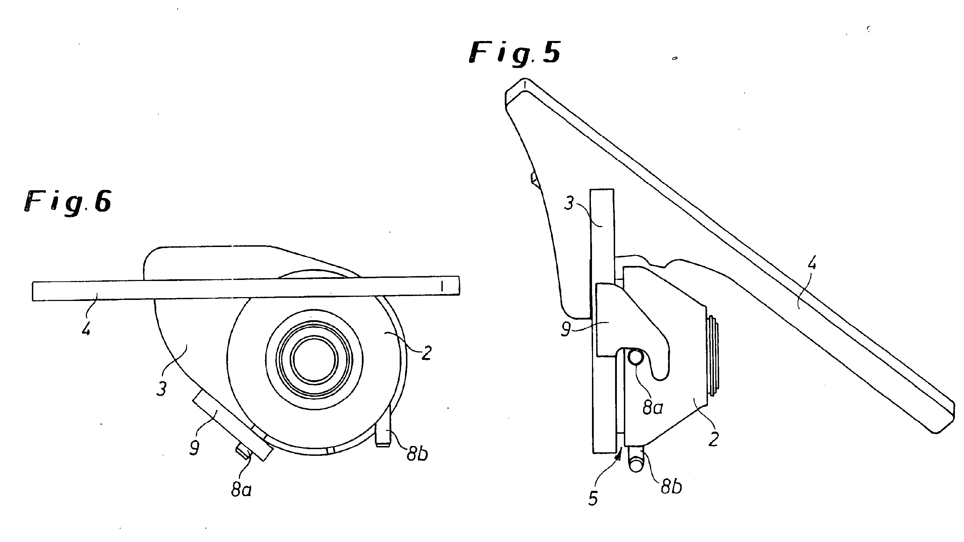

Sobald der nach Fig. 1 von dem Gegenanschlag 9 noch entfernte Bolzen 8a durch weiteres Verschwenken des Kugelstangenlagerkopfes 2 auf die hier an einem hakenartigen Kopfstück des Gegenanschlags 9 ausgebildete Einrückkontur 11a aufläuft (vgl. Fig. 3), wird der Kugelstangenlagerkopf 2 mit den Kugeln 6 allmählich zunehmend weiter in Richtung auf die Kugelkalotten des Anbauflansches 3 eingerückt, bis beim Auftreffen des Bolzens 8a auf die Anschlagkontur 12a (vgl. Fig. 5) die Endlage erreicht ist, in der die Kugeln 6 völlig in die Kugelkalotten eingetaucht sind und die somit geschlossene Formschlussverbindung 5 den Kugelstangenlagerkopf 2 in dieser Endposition drehfest festlegt.

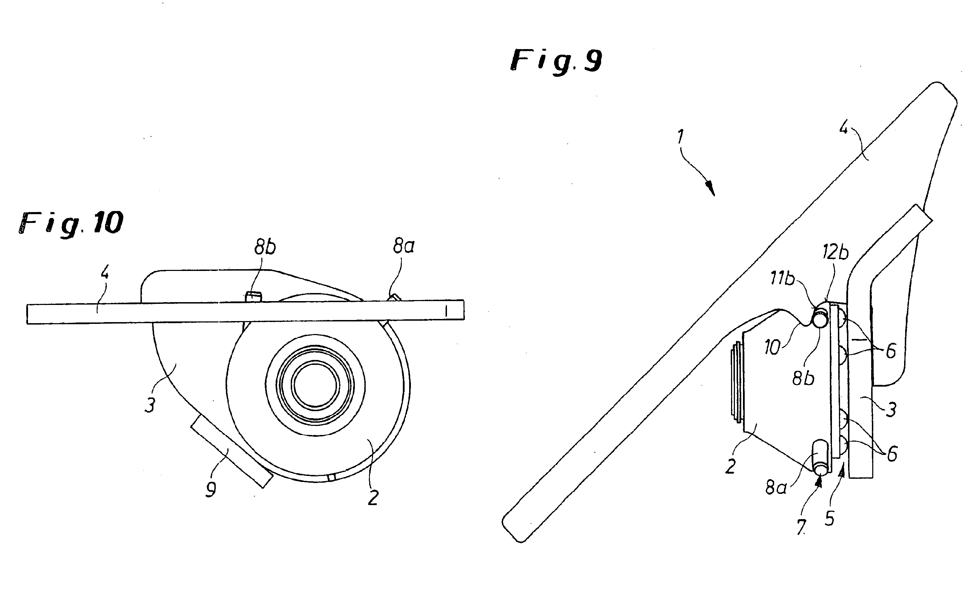

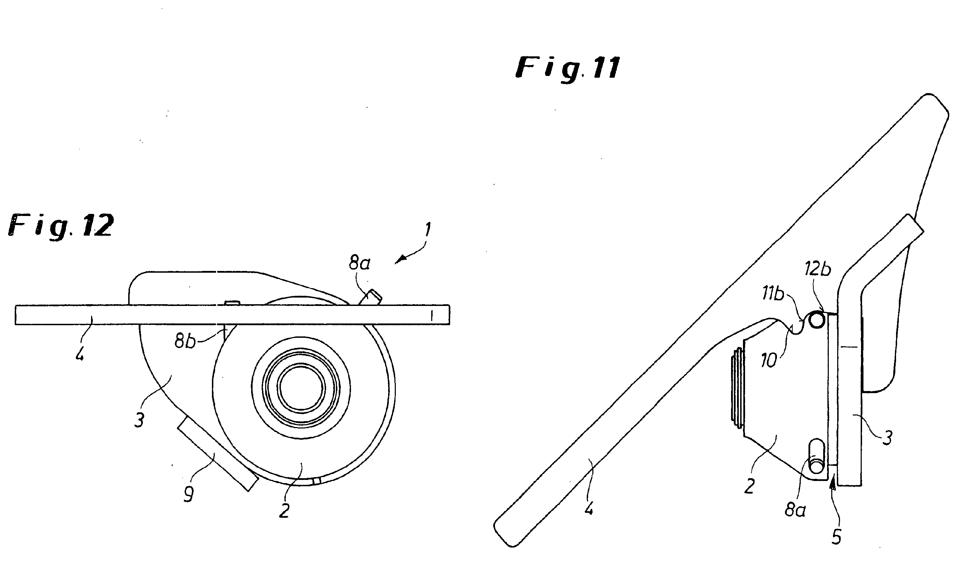

Der Gleiche Ablauf mit denselben Wirkungen bzw. Funktionen wie zuvor beschrieben stellt sich beim Verschwenken des Kugelstangenkopfes 2 in Gegenrichtung zur Ruhestellungs-Positionierung ein. Sobald der nach Fig. 7 von dem Gegenanschlag 10 noch entfernte Bolzen 8b durch weiteres Verschwenken des Kugelstangenlagerkopfes 2 auf die sogleich an dem Verbindungsblech 4 ausgebildete Einrückkontur 11 b des Gegenanschlags 10 aufläuft (vgl. Fig. 9), wird der Kugelstangenlagerkopf 2 mit den Kugeln 6 allmählich zunehmend weiter in Richtung auf die Kugelkalotten des Anbauflansches 3 eingerückt, bis beim Auftreffen des Bolzens 8b auf die Anschlagkontur 12b (vgl. Fig. 11) die Endlage erreicht ist, in der die Kugeln 6 völlig in die Kugelkalotten eingetaucht sind und die somit geschlossene Formschlussverbindung 5 den Kugelstangenlagerkopf 2 in dieser Endposition drehfest festlegt.

## Patentansprüche

1. Anhängekupplung (1) für Kraftfahrzeuge, umfassend eine fahrzeugfest angeordnete, schwenkbar sowie axial verschieblich gelagerte Kugelstange, die an ihrem freien Ende eine Kupplungskugel trägt und sowohl in ihrer Ruhestellung als auch in ihrer Betriebsstellung über in Eingriff bringbare Formschlußkonturen (6) einerseits eines Kugelstangenlagerkopfes (2) und andererseits eines diesem gegenüber liegenden Bauteiles (3) drehfest festlegbar ist, wobei der Kugelstangenlagerkopf (2) mit Anschlagmitteln (7; 8a, 8b) ausgebildet ist, denen in seiner Schwenkbahn liegende Gegenanschläge (9; 10) zugeordnet sind, die in der Betriebsstellung und in der Ruhestellung der Kugelstange die Schwenkbewegung des Kugelstangenlagerkopfes (2) begrenzen
**dadurch gekennzeichnet,**
**daß** die Gegenanschläge (9; 10) gleichzeitig zum axialen Einrücken des Kugelstangenlagerkopfes (2) in die Formschlussverbindung (5) der Formschlusskonturen (6) ausgebildet sind.

2. Anhängekupplung nach Anspruch 1,
**dadurch gekennzeichnet,**
**daß** die Gegenanschläge (9; 10) mit einer den Anschlagmitteln (7; 8a, 8b) beim Auftreffen eine axiale Bewegungskomponente auferlegenden Einrückkontur (11a; 11 b) ausgebildet sind, die in eine die Bewegungen beendende Anschlagkontur (12a; 12b) übergeht.

3. Anhängekupplung nach Anspruch 1 oder 2,
**gekennzeichnet durch**
zwei im Abstand voneinander angeordnete, über den Kugelstangenlagerkopf (2) radial herausragende Bolzen (8a, 8b) als Anschlagmittel (7).

4. Anhängekupplung nach einem der Ansprüche 1 bis 3,
**dadurch gekennzeichnet,**
**daß** die Gegenanschläge (9; 10) an Bauteilen (3; 4) eines am Fahrzeug montierten Anhängerkupplungs-Querträgers angeordnet sind.

## Claims

1. A drawbar (1) for motor vehicles, comprising a pivotably and axially displaceably mounted ball rod arranged on a vehicle in a fixed manner which at its free end carries a coupling ball and both in its rest position as well as in its operating position can be locked in a rotationally fixed manner via engageable positive connection contours (6) on the one hand of a ball rod bearing head (2) and on the other hand of a component (3) located opposite the latter, wherein the ball rod bearing head (2) is designed with stop means (7; 8a, 8b), which are assigned counterstops (9; 10) located in its pivot path, which in the operating position and in the rest position of the ball rod delimit the pivot movement of the ball rod bearing head (2), **characterized in that** the counterstops (9; 10) are simultaneously designed for the axial engagement of the ball rod bearing head (2) in the positive-locking connection (5) of the positive connection contours (6).

2. The drawbar according to Claim 1, **characterized in that** the counterstops (9; 10) are designed with an engagement contour (11 a; 11 b) imposing an axial movement component upon the stop means (7; 8a, 8b) upon impact, which turns into a stop contour (12a; 12b) ending the movements.

3. The drawbar according to Claim 1 or 2, **characterized by** two pins (8a, 8b) as stop means (7) radially protruding over the ball rod bearing head (2) arranged spaced from each other.

4. The drawbar according to any one of the Claims 1 to 3, **characterized in that** the counterstops (9; 10) are arranged on components (3; 4) of a drawbar cross member mounted on the vehicle.

## Revendications

1. Attelage de remorque (1) pour véhicules automobiles, comprenant une barre à boule disposée de façon solidaire du véhicule, orientable et montée de façon coulissante axialement, qui porte une boule d'attelage sur son extrémité libre et peut être fixée de façon solidaire en rotation tant dans sa position de repos que dans sa position de service au moyen de contours de complémentarité de forme (6) pouvant être mis en prise d'une part d'une tête de palier de barre à boule (2) et d'autre part d'un composant (3) faisant face à cette boule, la boule de palier de barre à boule (2) étant conçue avec des moyens de butée (7 ; 8a, 8b), auxquels des contre-butées (9 ; 10) situées dans sa trajectoire de basculement sont associées, lesquelles délimitent le mouvement de basculement de la tête de palier de la barre à boule (2) dans la position de service et dans la position de repos,
**caractérisé en ce que**
les contre-butées (9 ; 10) sont conçues en même temps pour l'engagement axial de la boule de palier de barre à boule (2) dans la liaison par complémentarité de forme (5) des contours de complémentarité de forme (6).

2. Attelage de remorque selon la revendication 1,
**caractérisé en ce que**
les contre-butées (9 ; 10) sont conçues avec un contour d'engagement (11a ; 11b) imposant aux moyens de butée (7, 8a ; 8b) une composante axiale de mouvement lors de l'impact, lequel contour fait place à un contour de butée (12a ; 12b) qui termine les mouvements.

3. Attelage de remorque selon la revendication 1 ou 2,
**caractérisé par**
deux boulons (8a, 8b) disposés à distance les uns des autres et dépassant radialement de la tête de palier de barre à boule (2) comme moyens de butée (7).

4. Attelage de remorque selon les revendications 1 à 3,
**caractérisé en ce que**
les contre-butées (9 ; 10) sont disposées sur des composants (3 ; 4) d'une traverse d'attelage de remorque montée sur le véhicule.
